# EUROPEAN PATENT APPLICATION

(11) **EP 2 375 702 A1**
(43) Date of publication of application: **12.10.2011**
(21) Application number: 09837635.3
(22) Date of filing: 30.07.2009
(51) Int. Cl.: H04M 1/00, H04M 1/57, H04M 1/65

(54) **MOBILE PHONE SLIDE MODULE**

(30) Priority: 08.01.2009 KR 20090001477; 03.03.2009 KR 20090018024; 30.04.2009 KR 20090038199
(71) Applicant: Hanbit Precision Co., Ltd., Uiwang-si, Gyeonggi-do 437-819 (KR)
(72) Inventor: LEE, Geun Ju, Anyang-si Gyeonggi-do 430-705 (KR)
(74) Representative: Dr. Weitzel & Partner
(86) International application number: PCT/KR2009/004247
(87) International publication number: WO 2010/079874

(57) **Abstract**

The present invention relates to a mobile phone slide module, and more particularly to a mobile phone slide module in which scratches and noise do not occur during the sliding operation of a mobile phone. The mobile phone slide module according to the present invention is installed between a movable plate fixed to an upper body where a display unit is installed and the fixed plate fixed to a lower body where a keypad is mounted, and provides elasticity when the movable plate slides on the fixed plate. The mobile phone slide module comprises a first body of which one end portion is coupled to the fixed plate and allows movement thereof, a second body of which one end portion is coupled to the movable plate and allows movement thereof, and a linear wire spring of which both ends are unrestricted by the first and second bodies and are connected to the first and second bodies through insertion.

## Description

### TECHNICAL FIELD

The present invention relates to a mobile phone slide module, and more particularly to a mobile phone slide module, in which scratches and noise do not occur during a sliding operation of the mobile phone.

### BACKGROUND ART

A general slide type mobile phone performs sliding operation in a manner that an upper body on which a display unit is mounted slides relatively on a lower body on which a keypad is mounted.

For such sliding operation, a slide module is installed in the mobile phone. Specifically, the mobile phone slide module is installed between a movable plate that is fixed to the upper body and a fixed plate that is fixed to the lower body. As the movable plate slides relatively on the fixed plate, the upper body slides on the lower body, and in this process, the slide module provides elasticity.

The mobile phone slide module typically includes an elastic spring. One example of such an elastic spring may be "an elastic spring for a slim slide module" disclosed in Registered Patent No. 10-0669990, which has been filed and registered by the applicant of the present application to cope with a slim mobile phone.

The registered patent relates to a wire spring that includes a bending portion having a circular arc shape, and spiral portions formed to be bent at both ends of the bending portion. One of the spiral portions formed at both ends of the bending portion is fixed to a fixed plate, and the other of the spiral portions is fixed to a movable plate, so that the spring generates an elastic restoring force when the movable plate slides on the fixed plate.

The above-described registered patent greatly contributes to a slim mobile phone since the slide module that is built in the mobile phone can be remarkably thinned by the wire spring.

However, it is actually required to somewhat improve the sensation of sliding of the slide type mobile phone.

Specifically, when the movable plate slides on the fixed plate, the wire spring touches the movable plate and the fixed plate to cause friction between them. The wire spring is typically made of a metal wire having high rigidity, whereas the movable plate and the fixed plate are made of aluminum or the like, which has a lower rigidity than the wire spring. Accordingly, during the above-described friction process, frictional wear (scratches) of the movable plate and the fixed plate occurs with noise. Further, in attendance with this, the sensation of sliding is lowered. Accordingly, there is a need for solving the above-described problems.

### DISCLOSURE

### TECHNICAL PROBLEM

Therefore, the present invention has been made in view of the above-mentioned problems, and a subject to be achieved by the present invention is to provide a mobile phone slide module, which can prevent the occurrence of frictional wear and noise by preventing a wire spring from touching a movable plate and a fixed plate during a sliding operation of a mobile phone.

Another subject to be achieved by the present invention is to provide a mobile phone slide module, which has a simple structure through the use of a linear wire spring that is bent with a predetermined curvature.

### TECHNICAL SOLUTION

In one embodiment of the present invention, there is provided a mobile phone slide module that is installed between a movable plate fixed to an upper body on which a display unit is mounted and a fixed plate fixed to a lower body on which a keypad is mounted to provide elasticity when the movable plate slides on the fixed plate, which includes a first body of which one end portion is movably coupled to the fixed plate; a second body of which one end portion is movably coupled to the movable plate; and linear wire springs of which both ends are unrestrictedly inserted and connected to the first and second bodies, respectively.

Insertion grooves, to which the both end portions of the wire springs are inserted and connected, may be formed on side surfaces of the first body and the second body in the other directions of the first body and the second body.

Cut grooves, which communicate with the insertion grooves, may be penetratingly formed in upward and downward directions on center regions of the first body and the second body.

At least two insertion grooves may be formed on the side surfaces of the first body and the second body in the other directions of the first body and the second body, and at least two wire springs may be provided to correspond to the number of the insertion grooves.

The wire spring may have an arc shape.

A first coupling portion and a second coupling portion, which are movably coupled to each other, may be formed to extend from the other ends of the first body and the second body.

### ADVANTAGEOUS EFFECTS

According to the mobile phone slide module according to the present invention, the linear elastic wire spring has a structure that is inserted and connected to the first and second bodies, and thus no friction occurs between the fixed plate and the movable plate, which are made of a metal material, and the wire spring, which is made of a metal wire. Accordingly, frictional wear and noise do not occur during the sliding operation.

Further, the mobile phone slide module according to the present invention has a simple construction including the first and second bodies and the wire springs, and can be conveniently assembled.

### BRIEF DESCRIPTION OF THE DRAWINGS

The foregoing and other objects, features and advantages of the present invention will become more apparent from the following detailed description when taken in conjunction with the accompanying drawings in which:
FIG. 1 is a partial exploded perspective view of a mobile phone showing the assembling state of a mobile phone slide module according to a preferred embodiment of the present invention;
FIG. 2 is a perspective views of the mobile phone slide module illustrated in FIG. 1;
FIG. 3 is an exploded perspective views of the mobile phone slide module illustrated in FIG. 1;
FIG. 4 is a view illustrating an elastic rotatable state of the mobile phone slide module illustrated in FIG. 1;
FIG. 5 is a view explaining an operation of a mobile phone slide module according to an embodiment of the present invention;
FIG. 6 is an exploded perspective view of a mobile phone slide module according to another preferred embodiment of the present invention;
FIG. 7 is an exploded perspective view of the mobile phone slide module showing another example of a coupling portion illustrated in FIG. 6; and
FIG. 8 is a view explaining an operation of a mobile phone slide module according to another embodiment of the present invention.

### * Description of Reference Numerals in the Drawing

1: mobile phone slide module
10: fixed plate
15: rivet
20: movable plate
100: wire spring
200a: first body
200b: second body
201: insertion groove
202: cut groove
203: coupling hole
210a, 210b: coupling portion

### BEST MODE

Hereinafter, the preferred embodiments of the present invention will be described in detail with reference to the accompanying drawings. The same reference numerals are used for the same members having the same functions or the same shape features.

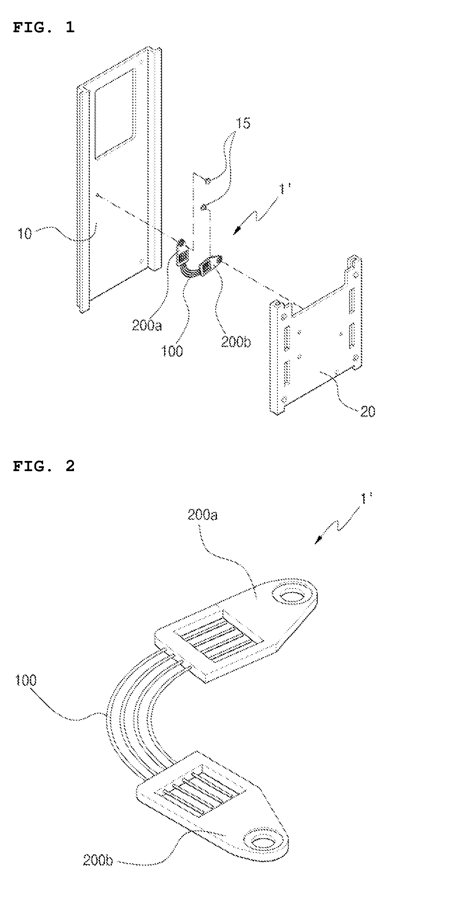

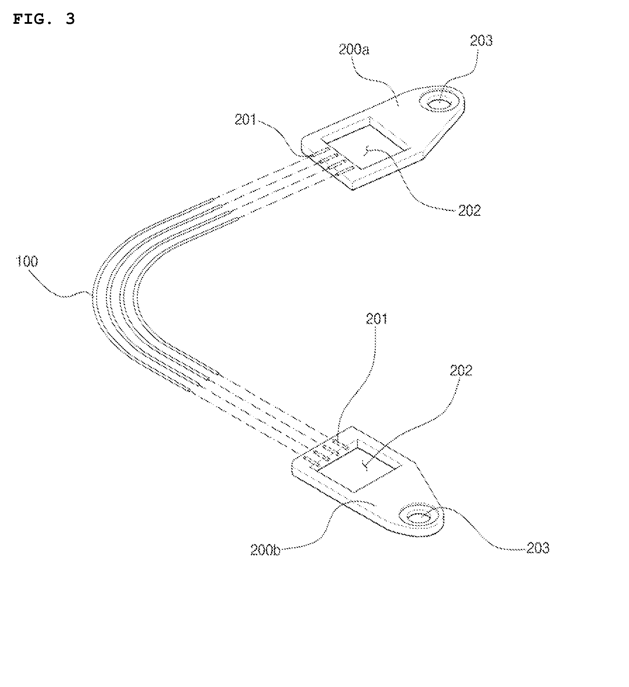

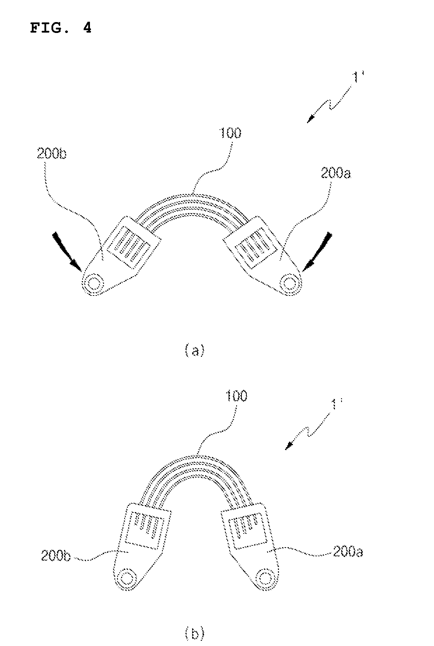

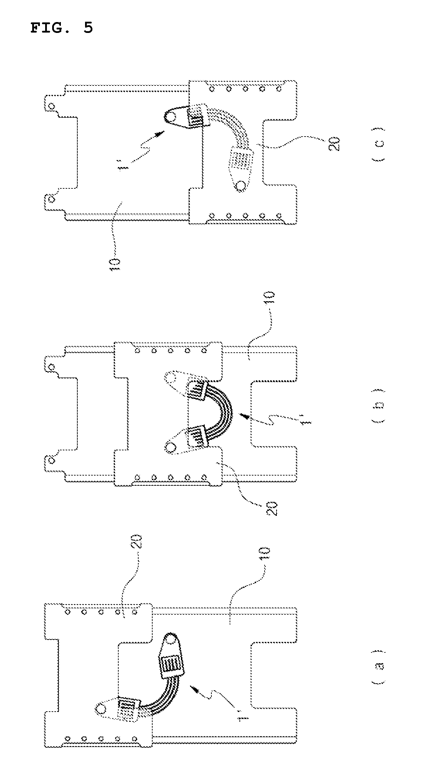

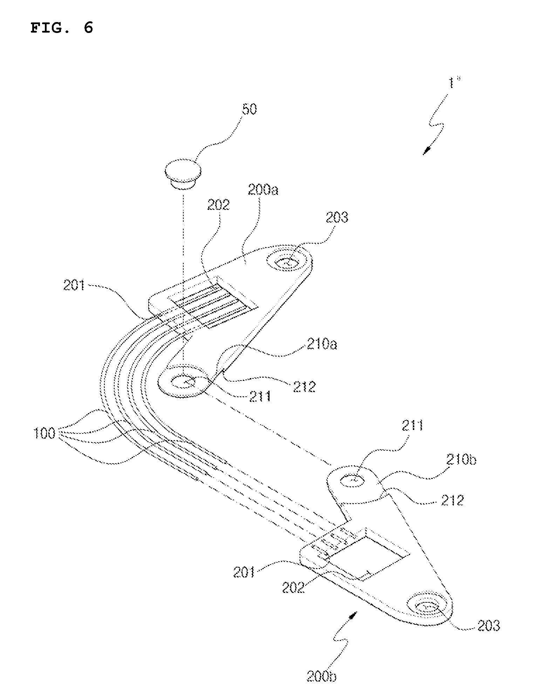

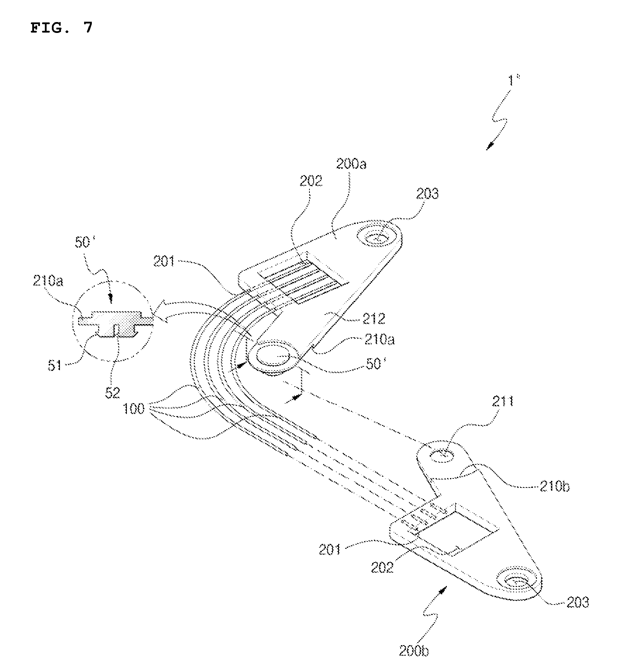

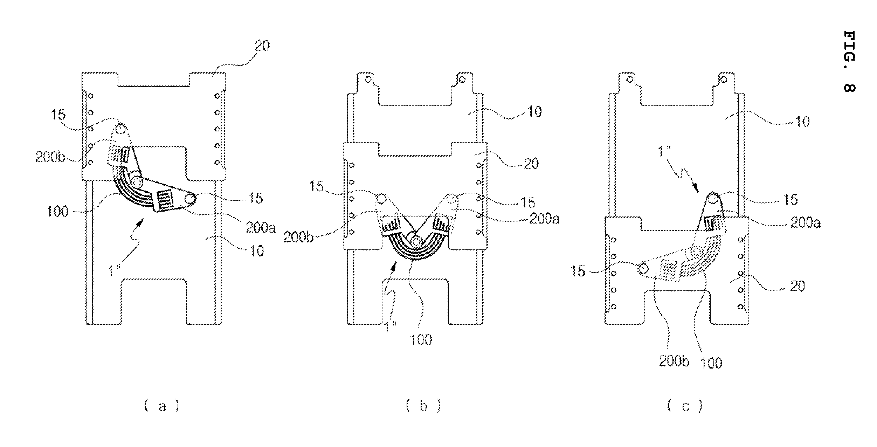

FIG. 1 is a partial exploded perspective view of a mobile phone showing the assembling state of a mobile phone slide module according to a preferred embodiment of the present invention, FIG. 2 is a perspective views of the mobile phone slide module illustrated in FIG. 1, and FIG. 3 is an exploded perspective views of the mobile phone slide module illustrated in FIG. 1. FIG. 4 is a view illustrating an elastic rotatable state of the mobile phone slide module illustrated in FIG. 1, and FIG. 5 is a view explaining an operation of a mobile phone slide module according to an embodiment of the present invention. FIG. 6 is an exploded perspective view of a mobile phone slide module according to another preferred embodiment of the present invention, FIG. 7 is an exploded perspective view of the mobile phone slide module showing another example of a coupling portion illustrated in FIG. 6, and FIG. 8 is a view explaining an operation of a mobile phone slide module according to another embodiment of the present invention.

A mobile phone slide module 1' according to an embodiment of the present invention includes wire springs 100, and first and second bodies 200a and 200b.

As illustrated in FIGS. 1 to 3, a linear wire spring is used as the wire spring 100. The wire spring 100 may be in an arc shape so that the gap between the first and second bodies is narrowed and thus the width of a fixed plate 10 and a movable plate 20 is narrowed.

As described above, the wire spring 100 is in the arc shape, and if both end portions of the wire spring 100 are straightened or further bent, the wire spring 100 generates an elastic force for restoring to the original arc shape.

Further, since the wire spring 100 according to this embodiment is simply linear unlike a complicated elastic spring that is included in a mobile phone slide module 1' in the related art, manufacturing of the wire spring is completed only by a work of bending the wire spring with a predetermined curvature to cause convenience in manufacturing, and the wire spring is very advantageous in manufacturing cost, reduction of the thickness of the slide module, and easy assembling.

Both end portions of the wire spring 100 are connected to the first body 200a and the second body 200b.

Prior to the detailed description of the first and second bodies 200a and 200b, the wordings "one side" and "the other side" in the following description regarding the first body 200a and the second body 200b are indicated on the assumption that the first body 200a and the second body 200b are independent constructions rather than being commonly indicated according to a certain absolute reference direction.

As illustrated in FIG. 1, on end portion of the first body 200a is movably coupled to the fixed plate 10, and one end portion of the second body 200b is movably coupled to the movable plate 20. Further, the first body 200a is connected to an end portion of the wire spring 100, and the second body 200b is connected to the other end portion of the wire spring 100, so that the first and second bodies 200a and 200b interlock with each other via the wire spring 100, that is, while receiving an elastic force from the wire spring 100.

Since the first body 200a and the second body 200b have a symmetric structure or shape as illustrated in the drawing, detailed explanation will be made with respect to the first body 200a, and this explanation of the first body 200a will replace the explanation of the second body 200b except for necessary explanation.

The external shape of the first body 200a is not necessarily limited to a certain specified shape, but it is preferable that the first body 200a is in the shape of a thin flat plate in consideration of the reduction of the thickness of the mobile phone slide module 1'. Further, the material of the first body 200a is not necessarily limited to a certain specified material, but it is preferable that the first body 200a is made of a plastic material that can minimize the occurrence of friction wear and noise even though the first body 200a touches the fixed plate 10 and the movable plate 200.

The other side of the first body 200a is connected to one end portion of the wire spring 100. As an example of a connection structure, as illustrated in FIGS. 2 and 3, insertion grooves 201 are formed to extend to the inside of the first body 200a with a predetermined length. The wire spring 100 is connected to the first body 200a as one end portion of the wire spring 100 is inserted through the insertion groove 201.

In this case, the one end portion of the wire spring 100 may be inserted and connected through compulsory fitting or without being restricted within the insertion groove 201. This can be applied in the same manner in connecting the other end portion of the wire spring 100 to the second body 200b.

The latter structure, that is, the structure in which the wire spring 100 is inserted and connected to the first and second bodies 200a and 200b without being restricted, can be provided by forming the insertion groove 201 so that the inner diameter of the insertion groove 201 becomes larger than the outer diameter of the wire spring 100.

According to the former structure, that is, according to the structure in which the both end portions of the wire spring 100 are inserted and fixed to the first and second bodies 200a and 200b, since the both end portions of the wire spring 100 are fixed to the first and second bodies 200a and 200b when bending deformation of the wire spring 100 occurs due to the relative sliding movement between the fixed plate 10 and the movable plate 20, a tensile force or compressive force acts on the wire spring 100 in the length direction of the wire spring 100, and this causes plastic deformation of the wire spring 100. This is not a preferable phenomenon in relation to the durability of the wire spring 100. Of course, by manufacturing the wire spring 100 with a material having high durability, the above-described problem may not occur.

However, it would be preferable to adopt the latter structure, that is, the structure in which the wire spring 100 is inserted and connected to the first and second bodies 200a and 200b without being restricted therein, in solving the above-described problems. In this case, even if a relative sliding movement is made between the fixed plate 10 and the movable plate 20, that is, even if the bending deformation of the wire spring 100 occurs, the tensile force or the compressive force does not act in the length direction of the wire spring 100 since the one end portion of the wire spring can freely move within a range in which the one end portion of the wire spring 100 does not deviate from the insertion groove 201. In this case, only an external force that bends the wire spring 100 acts. Accordingly, more preferable connection structure than the former structure can be provided from the viewpoint of the durability of the wire spring 100. Such operation state may be referred to in FIG. 4. If an external force acts in a direction indicated by an arrow as illustrated in FIG. 4(a), the end portions of the first and second bodies 200a and 200b are gathered together to provide the elasticity. In this case, only the bending deformation occurs in the wire spring 100, but the tensile force or the compressive force does not act in the length direction.

On the other hand, even in any one of the above-described connection structures, the thickness of the first and second bodies 200a and 200b should be larger than the outer diameter of the wire spring 100. Accordingly, even though the first body 200a touches the fixed plate 10 or the movable plate 20, the wire spring 100 does not touch the fixed plate 10 or the movable plate 20, and thus no friction occurs between the wire spring 100 and the fixed plate 10 or the movable plate 20.

On the other hand, a cut groove 202 that is penetrated in the upward and downward directions (on the basis of FIGS. 2 and 3) may be formed on the center region of the first body 200a. Further, the cut groove 202 communicates with the insertion groove 201.

Accordingly, one end portion of the wire spring 100 that is inserted into an area of the cut groove 202 through the insertion groove 201 is put in a space of the area of the cut groove 202, and thus even if the wire spring 100 is drawn out or inserted through the insertion groove 201 in the deformation process of the wire spring 100, no friction occurs between the wire spring 100 and the first body 200a within the area of the cut groove 202. Accordingly, the movement of the wire spring 10 becomes free, and the sensation of sliding is improved.

On the other hand, one insertion groove 201 may be formed on the side surface of the first body 200a in the other side direction of the first body 200a, or plural insertion grooves 201 may be formed to be spaced apart from each other along the length direction of the side surface.

In the case where one insertion groove 201 is formed, one wire spring 100 is provided to be connected to the first body 200a.

In the case where plural insertion grooves 201 are formed, at least two wire springs 100, the number of which is within the number of insertion grooves 201, may be provided. The wording "to correspond to the number of insertion grooves 201" described in accordance with the fourth aspect of the invention means the above-described conditions. Since plural wire springs 100 are provided, a necessary elastic force can be secured even if the manufactured wire springs 100 are maximally thin, and more improved effect can be obtained from the viewpoint of the reliability in elastic movement of the first and second bodies 200a and 200b.

The first body 200a is movably coupled to the fixed plate 10, and as an example of the coupling structure, a structure, in which a coupling hole 203 is formed on one end portion of the first body 200a and a fixing member such as a rivet 15 is coupled to the fixed plate 10 through the coupling hole 203, may be proposed.

The second body 200b is connected to the other end portion of the wire spring 100, one end portion of the second body 200b is movably coupled to the movable plate 20. The second body 200b has the same shape as the first body 200a, and is connected to the wire spring 100 with the same structure as the first body 200a. Accordingly, the detailed description of the second body 200b is replaced by the description of the first body 200a

FIG. 5 illustrates an elastic rotation state of the mobile phone slide module 1' according to an embodiment of the present invention along sliding movement of the movable plate 210 in a state where the mobile phone slide module 1' is installed between the fixed plate 10 and the movable plate 20.

FIG. 5(a) shows an initial state in which an elastic force of the wire spring 100 does not act on the first body 200a and the second body 200b.

If the movable plate 20 slides on the fixed plate 10 by applying an external force to the movable plate 20 in this state, the first body 200a and the second body 200b move as illustrated in FIG. 5(b), as overcoming the elastic force according to the deformation of the wire spring 100, to reach a state where one end portion of the first body 200a and one end portion of the second body 200b are gathered. If no external force acts in this state, the first body 200a and the second body 200b return to the state as illustrated in FIG. 5 (a) by the elastic force of the wire spring 100.

If the movable plate 20 further slides over a dead point in a state illustrated in FIG. 5(b), the sliding movement of the movable plate 20 automatically proceeds by the elastic force of the wire spring 100 even though no further external force acts on the movable plate 20, and the movable plate 20 reaches a state illustrated in FIG. 5(c).

FIGS. 6 to 8 illustrate a mobile phone slide module 1" according to another preferred embodiment of the present invention.

In the drawings, the same description as that according to the above-described embodiment will not be repeated.

Unlike the above-described embodiment, this embodiment relates to a structure in which the first body 200a and the second body 200b are movably coupled.

Accordingly, in this embodiment, the first and second bodies 200a and 200b receive the elastic force from the wire spring 100 as they move in a coupled state.

As a mutual coupling structure of the first and second bodies 200a and 200b, in an example illustrated in FIG. 6, first and second coupling portions 210a and 210b extend from the other ends of the first and second bodies 200a and 200b, respectively.

The first and second coupling portions 210a and 210b are movably coupled. Specifically, penetration holes 211 having the same diameter are formed on the respective end portions of the first and second coupling portions, and the first and second coupling portions 210a and 210b are piled up so that the respective penetration holes 211 coincide and communicate with each other and then are rotatably fixed to each other using a separate fixing member 50, so that the first and second coupling portions 210a and 210b are movably coupled to each other.

In FIG. 7, as another example of the coupling portions 210a and 210b illustrated in FIG. 6, a construction in which the first coupling portion 210a and the fixing member 50 are integrally formed is illustrated. Specifically, a fixing portion 50' is integrally formed with the end portion of the coupling portion 210a, and this fixing portion 50' is rotatably coupled to the penetration hole 211 formed on the end portion of the second coupling portion 210b, so that the first and second coupling portions 210a and 210b are movably coupled to each other. Further, on the lower portion of the fixing member 50', a step portion 51 and a cut portion 52 may be formed so that the fixing member 50' is rotatably fitted and coupled to the penetration hole 211.

On the other hand, in an example illustrated in FIGS. 6 and 7, step portions 212 may be form on upper and lower surfaces of the respective end portions of the first and second coupling portions 210a and 210b so that the thickness, in which the upper and lower surfaces of the first and second coupling portions 210a and 210b are piled up to form the same plane, can be minimized when the first and second coupling portions are piled up.

Further, the fixing portion 50' is formed on the second coupling portion 210b, and the penetration hole 211 is formed on the end portion of the first coupling portion 210a, so that they are mutually coupled to each other.

FIGS. 8(a) to 8(c) illustrate an operation state where the fixed plate 10 and the movable plate 20 slide on each other in a case where the mobile phone slide module 1" that is referred to in FIG. 6 or 7 is installed.

### INDUSTRIAL APPLICABILITY

As described above, according to the present invention, a linear wire spring is used as an elastic body, and this wire spring is inserted into and connected to first and second bodies. Accordingly, no friction occurs between a fixed plate and a movable plate, which are made of a metal material and the wire spring which is made of a metal material, and thus frictional wear and noise do not occur during a sliding operation.

Further, the present invention has a simple construction including the first and second bodies and the wire springs, and thus can be conveniently assembled.

While this invention has been described in connection with what is presently considered to be the most practical and preferred embodiments, it is to be understood that the invention is not limited to the disclosed embodiment and the drawings. On the contrary, it is intended to cover various modifications and variations within the spirit and scope of the appended claims.

## Claims

1. A mobile phone slide module that is installed between a movable plate fixed to an upper body on which a display unit is mounted and a fixed plate fixed to a lower body on which a keypad is mounted to provide elasticity when the movable plate slides on the fixed plate, the mobile phone slide module comprising:
a first body of which one end portion is movably coupled to the fixed plate;
a second body of which one end portion is movably coupled to the movable plate; and
linear wire springs of which both ends are unrestrictedly inserted and connected to the first and second bodies, respectively.

2. The mobile phone slide module according to claim 1, wherein insertion grooves, to which the both end portions of the wire springs are inserted and connected, are formed on side surfaces of the first body and the second body in the other directions of the first body and the second body.

3. The mobile phone slide module according to claim 2, wherein cut grooves, which communicate with the insertion grooves, are penetratingly formed in upward and downward directions on center regions of the first body and the second body.

4. The mobile phone slide module according to claim 2 or 3, wherein at least two insertion grooves are formed on the side surfaces of the first body and the second body in the other directions of the first body and the second body, and at least two wire springs are provided to correspond to the number of the insertion grooves.

5. The mobile phone slide module according to any one of claims 1 to 3, wherein the wire spring has an arc shape.

6. The mobile phone slide module according to any one of claims 1 to 3, wherein a first coupling portion and a second coupling portion, which are movably coupled to each other, are formed to extend from the other ends of the first body and the second body.
